**Europäisches Patentamt**

**European Patent Office**

**Office européen des brevets**

(19)

(11) Publication number: **0 202 037**
**B1**

(12) **EUROPEAN PATENT SPECIFICATION**

(45) Date of publication of patent specification: **07.02.90**

(51) Int. Cl.⁵: **B 60 P 3/24, A 01 C 23/00**

(21) Application number: **86302994.8**

(22) Date of filing: **21.04.86**

(54) Liquid storage tanks.

(30) Priority: **20.04.85 GB 8510140**

(43) Date of publication of application:
**20.11.86 Bulletin 86/47**

(45) Publication of the grant of the patent:
**07.02.90 Bulletin 90/06**

(84) Designated Contracting States:
**AT BE CH DE FR GB IT LI LU NL SE**

(56) References cited:
**DE-B-1 088 826**
**DE-C- 801 795**
**FR-A-1 036 590**
**FR-A-1 411 089**
**US-A-1 843 382**

(73) Proprietor: **Lund, John Brian**
**Elm Tree Farm Kirby Misperton Nr. Manton**
**North Yorkshire, YO17 0XT (GB)**

(72) Inventor: **Lund, John Brian**
**Elm Tree Farm Kirby Misperton Nr. Manton**
**North Yorkshire, YO17 0XT (GB)**

(74) Representative: **Stanley, David William et al**
**APPLEYARD LEES & CO. 15 Clare Road Halifax**
**West Yorkshire HX1 2HY (GB)**

Courier Press, Leamington Spa, England.

**Description**

This invention relates to liquid storage tanks, and is concerned particularly although not exclusively with slurry tankers.

Slurry tankers are well known in the field of agriculture, for the transport and spreading of liquid manure. Typically, slurry tankers are in the form of cylindrical tanks which are carried on trailers, adapted to be towed behind tractors. One of the problems that may be encountered when towing a partly filled slurry tanker is that, when going uphill, the liquid contents fall towards the back of the slurry tanker, thus taking weight off the driving wheels of the tractor. Thus, especially in wet going, the tractor may lose traction.

Preferred embodiments of the present invention aim to provide slurry tankers which may be improved in this respect.

DE—AS—1 088 826 discloses a transporter tank in which a housing is divided by an upright internal partition into two tank portions which communicate with one another only at or towards the base of the tank, and outlet means is provided at the base of the tank for the outlet of liquid from the tank. In fact, each of the two said tank portions is subdivided by horizontal partitions which are provided with closable apertures and serve as baffles. Although such baffles may serve to reduce surges in momentum of the contents of the tank during motion, no provision is made for locating the contents of the tank selectively fore or aft in the tank.

According to the present invention, there is provided a liquid storage tank comprising a closed housing having a base and divided by an upright internal partition into two tank portions which communicate with one another only at or towards said base, outlet means at or towards said base for the outlet of liquid from the tank, and valve means for selectively venting an upper part of one of said tank portions.

By operating the valve means, the contents of the tank may be retained preferentially in one of the tank portions when the tank is partially full.

Said valve means preferably comprises a one-way valve which allows only the exhaust of gas from said one tank portion.

Said housing may be elongate, with said partition extending transversely of said housing. Said housing may by cylindrical.

In an advantageous arrangement, said housing is carried on a vehicle. This said tank portions may be disposed respectively fore and aft of the vehicle. Preferably, said one tank portion is disposed fore of the vehicle.

The vehicle may be a wheeled road or land vehicle, and the invention may be applied with particular advantage where the vehicle is a trailer—e.g. a slurry tanker.

The housing may be divided by a plurality of upright internal partitions as aforesaid into more than two tank portions as aforesaid such that the tank portions communicate with one another only at the base of the tank, and valve means as aforesaid is provided for selectively venting an upper part of each of a plurality of said tank portions.

The upper parts of said tank portions may be interconnected via said valve means and a venting pipe which extends above the normal maximum liquid level of the tank and with which said valve means communicates.

Preferably, the housing is elongate and one of the tank portions at one end of said housing is so arranged that gas can flow both into and out of an upper part of that tank portion.

The tank may include means for selectively applying positive and/or negative pressure to the upper parts of said tank portions.

For a better understanding of the invention and to show how the same may be carried into effect, reference will now be made, by way of example, to the accompanying diagrammatic drawing, in which:

Figure 1 is a longitudinal section of a slurry tanker embodying the invention;

Figure 2 is a section taken on the line II—II of Figure 1; and

Figure 3 shows another slurry tanker, in longitudinal section.

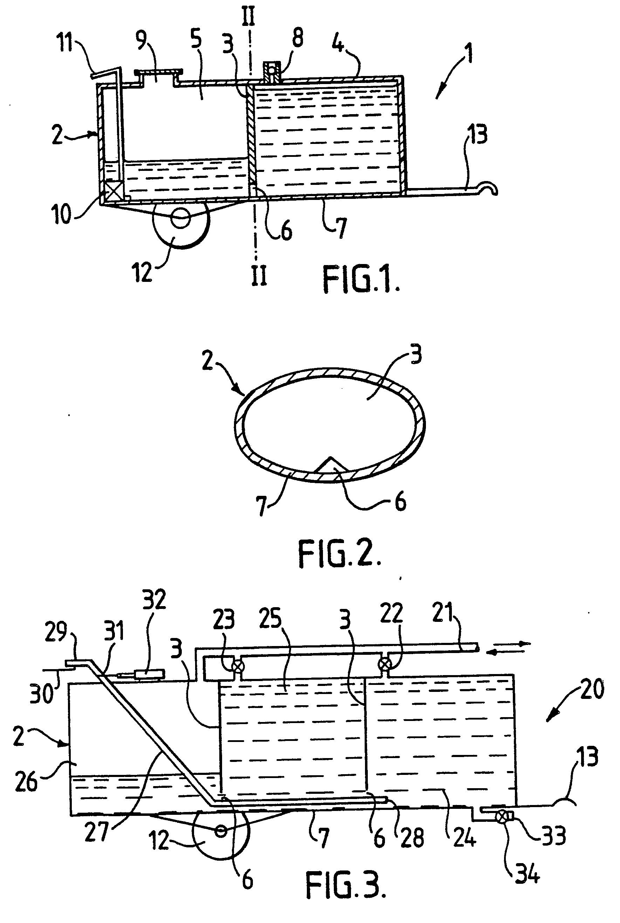

The slurry tanker 1 that is shown in Figures 1 and 2 comprises a closed elongate housing 2, which is generally oval in cross-section. The housing 2 is divided by an upright internal partition 3 into a first tank portion 4 and a second tank portion 5. The partition 3 is joined to the internal walls of the housing 2 around its periphery in a fluid-tight manner, apart from an aperture 6 which is provided at the bottom of the partition 3, towards a base 7 of the housing 2.

Thus, the two tank portions 4 and 5 communicate with one another via the aperture 6 but, apart from this, are separated in a fluid-tight manner.

The first tank portion 4 is provided on the upper wall of the housing 2 with a one-way ball valve 8, which allows air only to be exhausted from the first tank portion 4. The ball valve 8 is situated towards the rear of the first tank portion 4.

The second tank portion 5 is provided with a filler point 9, and with a discharge pump 10 feeding an outlet pipe 11, in a generally conventional manner. The housing 2 is mounted on a suitable chassis which is supported on a pair of land wheels 12, and is provided with a towing bar 13, by means of which the slurry tanker 1 may be towed behind a tractor.

The illustrated slurry tanker 1 operates as follows.

Firstly, the slurry tanker 1 is hitched to the draw bar of a tractor, by means of the towing bar 13. Then, when empty, the slurry tanker 1 is filled in a conventional manner, by pouring slurry into the housing 2, via the filler point 9. It will be appreciated that, as the slurry enters the housing 2, it progressively fills up both the first and second tank portions 4 and 5. As the first tank portion 4 is being filled, air is exhausted therefrom via the one way ball valve 8. Of course, as the second tank portion 5 is being filled, air is vented therefrom in a conventional manner, *via* the filling point 9. When the tanker 1 is full, the filling point 9 is closed.

The slurry tanker 1 may then be towed to a desired point, and the slurry discharged by means of the pump 10 and *via* the outlet pipe 11.

It will be appreciated that, when the pump 10 first begins to operate, slurry is discharged initially from the second tank portion 5. As the slurry is discharged, air enters the second tank portion 5 *via* the filler point 9, which provides sufficient venting for this purpose.

For as long as the level of the slurry in the second tank portion 5 stays above that of the aperture 6, the first tank portion 4 remains full of slurry. This is because the one-way ball valve 8 serves to prevent venting of the first tank portion 4. Thus, when partly full, the slurry within the housing 2 may be distributed generally as illustrated in Figure 1. This provides the advantage that, even when the tractor is going uphill, the weight of the slurry remains principally applied to the rear wheels of the tractor, thereby to assist traction. In conventional slurry tankers, the weight of the slurry tends to be transferred to the rear of the trailer when going uphill, thereby removing weight from the driven tractor wheels, and thereby reducing traction. Thus, the illustrated slurry tanker 1 may be much improved in this respect.

When the level of slurry in the second tank portion 5 falls to the level of the aperture 6, then air may pass from the second tank portion 5 to the first tank portion 4, allowing the slurry to be progressively discharged from the first tank portion 4.

Preferably, the ball valve 8 is manually releasable, to allow the first tank portion 4 to be vented to atmosphere at any time, should it be desired to equalize the distribution of slurry within the tank portions 4 and 5 or, indeed, to allow the weight of the slurry to be taken off the driven tractor wheels, when in an uphill position.

The slurry tanker 20 which is shown in Figure 3 is similar in a number of respects to the previously described slurry tanker, and in the figures, like reference numerals denote like or corresponding parts.

In Figure 3, however the housing 2 of the slurry tanker 20 is divided by means of two partitions 3 into first, second and third tank portions 24, 25 and 26. The slurry tanker 20 is a vacuum tanker, provided with a vacuum pipe 21, which is adapted to supply air under positive or negative pressure to the tank portions 24, 25 and 26. To this end, the vacuum pipe 21 communicates directly with the upper part of the third tank portion 26, and *via* the upper portions of the first and second tank portions 24 and 25 *via* respective valves 22 and 23.

A discharge pipe 27 has an inlet 28 disposed in the first tank portion 24, and an outlet 29 disposed above the housing 2 at the rear thereof, and adjacent a spreader plate 30. A gate valve 31 is adapted to open and close the discharge pipe 27, under the control of a pneumatic ram 32. A filler pipe 33, which is provided with a respective valve 34, communicates with the first tank portion 24.

The slurry tanker 20 operates as follows.

Firstly, it is hitched to a tractor by means of the towing bar 13, in a conventional manner. Then, when empty, the gate valve 31 is closed, all of the valves 22, 23 and 34 are opened, the filling point 33 is connected to a reservoir of slurry, and the vacuum pipe 21 is connected to negative pressure. Thus, it will be appreciated, all of the tank portions 24, 25 and 26 are subjected to negative pressure, causing slurry to be sucked into the housing 2, *via* the filling point 33. When the tank portions 24, 25 and 26 are full, the valve 34 is closed, the valves 22 and 23 are then closed, and the supply of negative pressure to the vacuum pipe 21 is terminated. The slurry tanker 20 is then towed to a desired location.

In order to discharge slurry from the tanker 20, positive air pressure is supplied to the vacuum pipe 21, and the gate valve 31 is opened. The slurry is then forced out of the discharge pipe 27, under the influence of the positive air pressure.

It will be appreciated that, initially, slurry is displaced only in the third tank portion 26, which is the only one in direct communication with the positive air pressure supply from the vacuum pipe 21. This continues for as long as the level of slurry in the third tank portion 26 is above the level of the aperture 6 in the respective partition 3 which separates the second tank portion 25 from the third tank portion 26 in an otherwise fluid-tight manner. Thus, as in the preceding embodiment, the weight of slurry may be maintained principally of the driven tractor wheels, even when going uphill.

As soon as the level of slurry in the third tank portion 26 falls to the level of the respective aperture 6, then the positive air pressure begins to prevail in the second tank portion 25, which then begins to empty progressively. In a similar manner, the first tank portion 24 remains full of slurry until the level in the second tank portion 25 falls below that of the aperture 6, after which the first tank portion 24 begins to empty progressively. It will be appreciated that the tank portions 24, 25 and 26 may selectively be equalised at any time, by appropriate actuation of the valves 22 and 23.

The valves 22 and 23 may be one-way valves, similar to the ball valve 8 of Figure 1, for example. Thus, they may open automatically when a negative pressure prevails in the vacuum pipe 21, and close automatically when positive pressure prevails in the vacuum pipe 21.

Thus, both of the illustrated embodiments provide slurry tankers 1 and 20 which may be operated in a largely conventional manner, except that they provide the facility for retaining the weight of slurry over the driven tractor wheels when the tanker is part-filled, even when going uphill. A particular feature of the illustrated embodiments is the ease with which this facility may be provided. In this respect, it is to be appreciated that slurry tankers are often provided with reinforcing baffles extending transversely of the tanker housing, to reinforce the tanker housing and to dampen oscillations of slurry in the tanker, during travel. All that is required is to substitute for such a baffle in a slurry tanker an upright partition such as is illustrated in Figures 1 and 2, to separate the housing into the two portions 4 and 5 which communicate only *via* the bottom aperture 6, and then to provide the one-way valve 8 in the upper wall of the housing 2. Similarly, the embodiment of Figure 3 may be provided in a very simple manner.

It will therefore be appreciated that the present invention may be provided at very little additional cost. Moreover, existing slurry tankers may readily be converted to provide the features of the invention, and the invention extends to methods of so modifying existing slurry tankers.

## Claims

1. A liquid storage tank (1) comprising a closed housing (2) having a base (7) and divided by an upright internal partition (3) into two tank portions (4, 5) which communicate with one another only at or towards said base (7), and outlet means (10) at or towards said base for the outlet of liquid from the tank (1) characterized in that the tank further comprises valve means (8) for selectively venting an upper part of one of said tank portions (4, 5).

2. A tank according to Claim 1, wherein said valve means (8) comprises a one-way valve which allows only the exhaust of gas from said one tank portion (4).

3. A tank according to Claim 1 or 2, wherein said housing (2) is elongate, and said partition (3) extends transversely of said housing (2).

4. A tank according to Claim 1, 2 or 3, wherein said housing (2) is cylindrical.

5. A tank according to any of the preceding claims, wherein said housing (2) is carried on a vehicle.

6. A tank according to Claim 5, wherein said tank portions (4, 5) are disposed respectively fore and aft of the vehicle.

7. A tank according to Claim 6, wherein said one tank portion (4) disposed fore of the vehicle.

8. A tank according to Claim 5, 6 or 7, wherein said vehicle is a wheeled road or land vehicle.

9. A tank according to Claim 8, wherein the vehicle is a trailer.

10. A tank according to any of the preceding claims, being a slurry tank.

11. A tank according to any of the preceding claims, wherein said housing (2) is divided by a plurality of upright internal partitions (3) as aforesaid into more than two tank portions as aforesaid (24, 25, 26) such that the tank portions communicate with one another only at the base of the tank (20), and valve means (22, 23) as aforesaid is provided for selectively venting an upper part of each of a plurality of said tank portions (24, 25).

12. A tank according to any of the preceding claims, wherein the upper parts of said tank portions are interconnected via said valve means (22, 23) and a venting pipe (21) which extends above the normal maximum liquid level of the tank and with which said valve means communicates.

13. A tank according to any of the preceding claims, wherein said housing (2) is elongate and one of the tank portions (4, 5) at one end of said housing is so arranged that gas can flow both into and out of an upper part of that tank portion.

14. A tank according to any of the preceding claims, including means for selectively applying positive and/or negative pressure to the upper parts of said tank portions (24, 25, 26).

## Patentansprüche

1. Ein Flüssigkeitsspeichertank (1) mit einem geschlossenen Gehäuse (2), das ein Unterteil (7) aufweist und durch eine aufrecht stehende innere Trennwand (3) in zwei Tankbereiche (4, 5) aufgeteilt ist, welche nur an dem Unterteil (7) oder in dessen Nähe miteinander in Verbindung stehen, sowie eine Auslaßeinrichtung (10) an dem Unterteil oder in dessen Nähe für das Ablassen von Flüssigkeit aus dem Tank (1), dadurch gekennzeichnet, daß der Tank außerdem eine Ventileinrichtung (8) zur wahlweisen Entlüftung eines oberen Teils eines dieser Tankbereiche (4, 5) aufweist.

2. Ein Tank nach Anspruch 1, dadurch gekennzeichnet, daß die Ventileinrichtung (8) ein Einwegeventil aufweist, welches nur das Evakuieren von Gas aus dem einem Tankbereich (4) erlaubt.

3. Ein Tank nach Anspruch 1 oder 2, dadurch gekennzeichnet, daß das Gehäuse (2) länglich ist und sich die Trennwand (3) quer zum Gehäuse (2) erstreckt.

4. Ein Tank nach Anspruch 1, 2 oder 3, dadurch gekennzeichnet, daß das Gehäuse (2) zylindrisch ist.

5. Ein Tank nach einem der vorhergehenden Ansprüche, dadurch gekennzeichnet, daß das Gehäuse (2) auf einem Fahrzeug gehalten wird.

6. Ein Tank nach Anspruch 5, dadurch gekennzeichnet, daß die Tankbereiche (4, 5) jeweils vor bzw. hinter zum Fahrzeug angeordnet sind.

7. Ein Tank nach Anspruch 6, dadurch gekennzeichnet, daß der eine Tankbereich (4) vor dem Fahrzeug angeordnet ist.

8. Ein Tank nach Anspruch 5, 6 oder 7, dadurch gekennzeichnet, daß das Fahrzeug ein Straßen- oder Landfahrzeug mit Rädern ist.

9. Ein Tank nach Anspruch 8, dadurch gekennzeichnet, daß das Fahrzeug ein Anhänger ist.

10. Ein Tank nach einem der vorhergehenden Ansprüche, dadurch gekennzeichnet, daß dieser ein Schlammtank ist.

11. Ein Tank nach einem der vorhergehenden Ansprüche, dadurch gekennzeichnet, daß das Gehäuse (2) durch mehrere, aufrecht stehende innere Trennwände (3), wie oben genannt, in mehr als zwei Tankbereiche (24, 25, 26), wie oben genannt, so aufgeteilt ist, daß die Tankbereiche nur an dem Unterteil des Tanks (20) miteinander in Verbindung stehen, und eine Ventileinrichtung (22, 23), wie oben genannt, zur wahlweisen Entlüftung eines oberen Teils eines jeden von diesen mehreren Tankbereichen (24, 25) vorgesehen ist.

12. Ein Tank nach einem der vorhergehenden Ansprüche, dadurch gekennzeichnet, daß die oberen Teile der Tankbereiche durch die Ventileinrichtung (22, 23) und ein Entlüftungsrohr (21) miteinander verbunden sind, das sich oberhalb das normalen maximalen Flüssigkeitspegels des Tanks erstreckt und mit dem die Ventileinrichtung in Verbindung steht.

13. Ein Tank nach einem der vorhergehenden Ansprüche, dadurch gekennzeichnet, daß das Gehäuse (2) länglich ist und einer der Tankbereiche (4, 5) an einem Ende des Gehäuses an angeordnet ist, und das Gas sowohl in als auch aus einem oberen Teil dieses Tankbereichs strömen kann.

14. Ein Tank nach einem der vorhergehenden Ansprüche, dadurch gekennzeichnet, daß er eine Einrichtung zum wahlweisen Anlegen eines positiven und/oder negativen Drucks an die oberen Teile der Tankbereiche (24, 25, 26) aufweist.

**Revendications**

1. Citerne de stockage de liquide (1) comportant un logement fermé (2) pourvu d'une base (7) et subdivisé par une cloison interne verticale (3) en deux parties de citerne (4, 5) qui communiquent l'une avec l'autre uniquement au niveau ou à proximaté de ladite base (7), et des moyens d'évacuation (10) situés au niveau ou à proximité de ladite base pour évacuer du liquide hors de la citerne (1), caractérisée en ce qu'elle comporte également des moyens formant soupape (8) pour aérer sélectivement une portion supérieure de l'une desdites parties de citerne (4, 5).

2. Citerne selon la revendication 1, dans laquelle lesdits moyens formant soupape (8) comportant une soupape à une seule voie permettant l'échappement de gaz uniquement hors de l'une (4) desdites parties de citerne.

3. Citerne selon la revendication 1 ou 2, dans laquelle ledit logement (2) est allongé, ladite cloison (3) s'étendant transversalement audit logement (2).

4. Citerne selon la revendication 1, 2 ou 3, dans laquelle ledit logement (2) est cylindrique.

5. Citerne selon l'une quelconque des revendications précédentes, dans laquelle ledit logement (2) est transporté sur un véhicule.

6. Citerne selon la revendication 5, dans laquelle lesdites parties de citerne (4, 5) sont respectivement disposées à l'avant et à l'arrière du véhicule.

7. Citerne selon la revendication 6, dans laquelle l'une (4) desdites parties de citerne est disposée à l'avant du véhicule.

8. Citerne selon la revendication 5, 6 ou 7, dans laquelle ledit véhicule est un véhicule routier ou agricole monté sur roues.

9. Citerne selon la revendication 8, dans laquelle le véhicule est une remorque.

10. Citerne selon l'une quelconque des revendications précédentes, qui est une citerne contenant une suspension épaisse.

11. Citerne selon l'une quelconque des revendications précédentes, dans laquelle ledit logement (2) est subdivisé, comme précité, par une série de cloisons internes verticales (3) en au moins trois parties de citerne (24, 25, 26), telles que précitées, de façon que les parties de citerne communiquent les unes avec les autres uniquement au niveau de la base de la citerne (20), des moyens formant soupape (22, 23), tels que précités, étant prévus pour aérer sélectivement une portion supérieure de chacune d'une série desdites parties de citerne (24, 25).

12. Citerne selon l'une quelconque des revendications précédentes, dans laquelle les portions supérieures desdites parties de citerne sont reliées entre elles par l'intermédiaire desdits moyens formant soupape (22, 23) et d'un tuyau d'aération (21) qui s'étend audessus du niveau de liquide maximal normal de la citerne et avec lequel lesdits moyens formant soupape communiquent.

13. Citerne selon l'une quelconque des revendications précédentes, dans laquelle ledit logement (2) est allongé, l'une des parties de citerne (4, 5) située à l'une des extrémités dudit logement, étant conçue de façon que du gaz puisse pénétrer dans une portion supérieure de cette partie de citerne et s'en échapper.

14. Citerne selon l'une quelconque des revendications précédentes, comportant des moyens pour appliquer sélectivement une pression positive et/ou négative aux portions supérieures desdites parties de citerne (24, 25, 26).

FIG.1.

FIG.2.

FIG.3.